# EUROPEAN PATENT SPECIFICATION

(11) **EP 2 614 279 B1**
(45) Date of publication and mention of the grant of the patent: **13.08.2014**
(21) Application number: 11757914.4
(22) Date of filing: 08.09.2011
(51) Int. Cl.: F16K 27/02

(54) **A FLOW CONTROL DEVICE**
DURCHFLUSSKONTROLLVORRICHTUNG
DISPOSITIF DE RÉGULATION DE DÉBIT

(30) Priority: 11.09.2010 GB 201015175
(43) Date of publication of application: 17.07.2013
(73) Proprietor: Bifold Fluidpower Limited, Middleton M24 1SW (GB)
(72) Inventor: HILL, Stephen, Paul, Oldham OL4 5PY (GB)
(74) Representative: Lambert, Thomas John
(86) International application number: PCT/GB2011/001319
(87) International publication number: WO 2012/032298

(56) References cited:
- EP-A1- 0 360 718
- GB-A- 437 327
- US-A- 2 737 979

## Description

The present invention relates to a flow control device for controlling the rate of flow of fluid and more particularly, but not exclusively, to such a device for controlling the flow of fluid to and from an actuator.

Large valves, and those in remote or difficult to access locations, are generally operated by means of an actuator. The operation of, for example, a ball valve in an offshore gas or petro-chemical pipeline is often effected by a valve positioner that provides fluid (typically pneumatic) signals to the actuator for operating the valve. The actuator comprises a piston and cylinder arrangement which can take several forms. For example, in one actuator type the piston divides the actuator cylinder into a pair of chambers at least one of which may be selectively pressurised by the introduction compressed air in order to move the piston and operate the valve. A shaft of the piston is linked mechanically to a stem of the ball valve so that its movement in the cylinder effects rotation of the valve. In a single-acting piston, the other chamber is occupied by a biasing member such as a spring against which the pressurised air acts. When the pressurised air supply drops below a certain value the force applied by it to one side of the piston is less than that applied on the other side by the spring in which case the pressurised air is exhausted from the cylinder. In a double-acting piston air is selectively supplied to one of the chambers and simultaneously exhausted from the other.

The pressurised air is generally supplied to the actuator to advance the piston within the cylinder via a pneumatic supply circuit, including one or more directional fluid control valves that control the supply of air to and from the actuator. Exhaust air from the actuator can be directed through the control valve(s) in the supply circuit in which case the flow rate may be restricted or, alternatively, a quick exhaust valve may be used. This particularly desirable when there is an emergency that requires actuator to close the pipeline valve as quickly as possible.

The positioner and the directional fluid control valves are generally supported on mounting surfaces defined on the exterior of the actuator cylinder, the surfaces typically having a Namur standard interface in which the positions and sizes of the ports and mounting bores conform to the standard. For the interface with the directional fluid control valve there are two ports for air communication with respective chambers on each side of the piston and fixing apertures to which the control valves are fixed. Other devices such as a valve position indicator or a pressure gauge may also be mounted to the actuator housing.

Separate fluid speed flow control devices may form part of the pneumatic supply circuit. One may be used to control the rate of flow of fluid supplied to the actuator and another may be used to control the rate of exhaust of the fluid from the actuator. It is desirable to simplify such pneumatic supply circuits. For example, it is desirable to reduce the number of separate components and to make the circuit more compact and/or modular.

EP0360718 (LEGRIS SA) discloses a pilot-operated regulating connector for the speed regulator of pneumatic piston and cylinder units.

GB437327 (ALEXANDER BANNATYNE STEWART) discloses a relief valve device for maintaining predetermined pressure in fluid circulating systems.

US2737979 (Harold Parker) discloses a valve structure adapted to effect mixing of liquids utilizing the flow velocity of the liquids for that purpose.

It is an object of the present invention to obviate or mitigate the above, and other, disadvantages. It is also an object of the present invention to provide for an improved, or alternative, fluid flow control device.

According to the present invention there is provided a flow control device comprising a body having a first fluid port and a second fluid port, a first valve seat in fluid communication with the first fluid port and a second valve seat in fluid communication with the second fluid port, the first and second valve seats spaced apart in the body to define a clearance between them, a fluid pressure actuated floating valve member in the clearance and arranged to travel in a direction towards the first valve seat and away from the second valve seat and in the opposite direction depending on the prevailing fluid pressures at the first and second fluid ports, the valve member having opposed first and second ends for co-operation with the first and second valve seats, at least one stop for limiting the travel of the valve member towards the first or second valve seat, at least one of the first and second valve seats being adjustable to vary its position relative to the valve member.

The valve member is floating in the sense that it moves under the influence of fluid pressures acting on it from the first and second ports and not as a result of external actuation. The valve member may be guided in its floating movement by guide elements between it and the body.

The rate of flow of fluid from the first port to the second port or in the opposite direction is controlled by the distance between one of the ends of valve member and a corresponding valve seat. For example, if the direction of flow is from the first port to the second port the distance between the second end of the valve member and the second valve seat, which are both downstream from the first end of the valve member and the first valve seat, determines the rate of flow. In the reverse direction of flow it is the first end and valve seat that control the flow.

The first and second ports may be spaced apart along a length of a device. They may be axially aligned with the flow through the first and second valve seats or may be otherwise oriented.

The body may define a bore in which the first and second valve seats and the valve member are disposed. The first and second valve seats may be adjustable axially in the bore.

The at least one stop may be positioned to ensure that a minimum distance is maintained for a given position of the valve seat. The minimum distance between the valve seat and the valve member is adjustable by adjusting the position of the first or second valve seat. In some embodiments the minimum distance may be reduced to zero. The at least one stop may project inwardly from the body, preferably in a substantially radial direction.

The flow control device is bi-directional in that fluid may flow from the first port to the second port or in the opposite direction, the rate of flow in a given direction being adjustable by adjusting the position of one of the first or second valve seats.

One or both of the first and second valve seats may be tapered and may define a substantially frustoconical surface. The corresponding first and/or second end of the valve member may be tapered and may define complementary frustoconical surfaces. The valve member may comprise a central body between the first and second ends, the central body being configured to come into abutment with the at least one stop. There may be first and second stops, the first stop being proximal the first end of the valve member and the second stop being proximal the second end of the valve member. The central body may define at least one projection for abutment with the at least one stop or where there are first and second stops it defines at least one first projection proximal the first end and at least one second projection proximal the second end. The (or each) projection is preferably configured such that when in abutment with the stop there is a clearance between the valve member and the stop member through which fluid may flow towards the respective valve seat.

The first and second valve seats may be defined by first and second valve seat members that may be in threaded engagement with the body such that the positions of the seats may be axially adjusted by rotation about an axis of rotation. The first and second valve seat members may close first and second openings of the bore in the body. The members may be engageable through the openings by a tool to effect adjustment.

Alternatively the position of the first and/or second valves seats may be adjusted by an adjustment mechanism that converts rotational movement of an adjustment member, such as a screw, into axial movement of the corresponding valve seat. The mechanism may comprise a pivoting lever having a first arm coupled to the adjustment member and a second arm coupled to a component that defines the valve seat.

The first and second valve seat members may be in the form of first and second flow screws. Each flow screw may have a head portion that is in threaded engagement with the body and a shank portion that is partially hollow to define the respective valve seat. Each screw may have a slot in its head for engagement with a suitable tool for rotation in order to adjust its position.

There may be a radial clearance between each of the valve seats and the body which may define an internal annular, or partially annular, flow path. The clearance may be sealed although there may be at least one aperture through the valve seat member for fluid to flow from the flow path to the respective valve seat. The at least one aperture may be substantially radially directed. There may be a plurality of such apertures angularly spaced around the valve seat member. The first fluid port of the body may be in fluid communication with a first internal flow path. A second fluid port may be in fluid communication with a second internal flow path, the first and second flow paths being spaced apart.

The valve member may be penetrated by at least one bypass bore that is open to the first end such that in the event that the first end is sealed against the first valve seat fluid can bypass the first valve seat and still flow through the body.

The at least one stop may also limit the position of the valve seat member relative to the body.

The body may be cylindrical and may define a plurality of external annular (including partially annular) flow paths on an external surface. The external annular flow paths may be separated by sealing members. A first external annular flow path may be in flow communication with the first internal annular flow path via apertures in the body. A second external annular flow path may be in flow communication with a second internal annular flow path via apertures in the body.

There may be a third external annular flow path on an external surface of the body. The third external annular flow path may not be in communication with the interior of the body such that it provides a flow path that bypasses the interior of the device. The third external annular flow path may be disposed between the first and second external annular flow paths.

The flow control device may be disposed in a mounting member for fixing to a piston actuator and for coupling to a flow directional control valve for controlling the supply of fluid to the actuator. The mounting member may have first and second ports for fluid communication with corresponding ports on the actuator. They may also be in fluid communication with the first and second fluid ports of the device.

The device may thus operate to control the speed of flow of the fluid to or from the actuator. The flow control device is bi-directional to allow fluid to flow through it in opposite directions. The fluid flow control device may control the speed of flow of fluid to and from the actuator and in particular to and from the first port of the mounting member.

The directional control valve may have at least one first fluid passage for the supply of fluid to the actuator and at least one second fluid passage for the exhaust of fluid from the actuator.

The mounting member may have at least one fluid path for providing fluid communication between the first and second ports of the mounting member and the first and second fluid passages in the directional control valve.

The directional control valve may comprise a valve body into which the first and second fluid passages extend.

The actuator of preferably has an outer surface with a Namur standard interface on which the mounting member is to be mounted, the interface defining the corresponding ports on the actuator and fixing bores.

The mounting member may comprise a body with at least first and second fluid paths. A first fluid flow path may be arranged to supply fluid to the first port of the mounting member and a second may be arranged to exhaust fluid from the first and/or second port.

The valve may be fluid connected to the mounting member at an interface. There may be respective interfacing surfaces of the valve and the mounting member at the interface. The valve may be rotatably coupled to the mounting member for rotation about a rotational axis.

The rotatable valve may have a first opening in communication with the first fluid passage and a second opening in communication with the second fluid passage. The first and second openings are preferably at the interface.

The first fluid passage may be a fluid feed passage for feeding fluid towards the actuator. The second fluid passage may be an exhaust passage for receiving exhaust gas from the actuator. There may be more than one first or second fluid passages.

The first port of the mounting member may be in communication with the first passage, preferably via a first fluid path in the mounting member. The flow control device is preferably disposed in the first fluid path such that its first port is in fluid communication with the first port of the mounting member.

The second port of the mounting may be in communication with the second port of the flow control device.

The mounting member may provide a recirculation fluid flow path between the first and second ports of the mounting member so that fluid may be directed from one chamber in the actuator to another chamber in the actuator. The flow control device may form part of the recirculation flow path.

The mounting member may have a first opening for communication with the first port and a second opening for communication with the second port. The first and second openings are preferably at the interface.

The mounting member may have a further fluid path for fluid to flow from the first port to the second opening. It may also have at least one vent path for directing exhaust fluid from the first port or the second port to a vent in the mounting member. This may bypass the fluid control device

An annular channel may defined in one of the interfacing surfaces, the annular channel being in communication with the respective first or second openings of the mounting member and the rotatable part and being offset from the rotational axis.

The annular channel describes an annulus with a centre that may be substantially coincident with the axis of rotation of the rotatable part, such that the annular channel is in fluid communication with whichever of the first or second openings of the mounting member or the rotatable part is not coincident with the rotational axis. In other words, whatever the angular position of the valve relative to the mounting member, the annular channel maintains fluid communication between the openings that are not centred on the rotational axis.

The first fluid passage in the rotatable part may have at least a portion extending from the first opening in the valve that is coaxial with the rotational axis. Similarly, a first fluid path may extend from the first opening in the mounting member, at least part of the first fluid path being coaxial with the rotational axis and therefore coaxial with at least part of the first fluid path.

One of the mounting member and the valve may comprise a clamping surface with the other of the mounting member and the rotatable part being connected to the clamping member for clamping directly or indirectly against the clamping surface. The clamping surface may be defined by an inwardly or outwardly extending surface defined on the mounting member or the rotatable part and the clamping member may be movable into clamping engagement with the surface. The clamping surface may extend in a substantially radial direction.

The mounting member may have a first chamber in a first fluid path, the first chamber being in fluid communication with the first port. This first chamber may optionally house a quick exhaust valve. The outlet of the flow control device may be in fluid communication with the quick exhaust valve.

The mounting member body may have a first side port and the first chamber may be in communication with the first side port for fluid connection to a vent.

The mounting member may have at least one mounting fixing (such as a screw or bolt or the like) for fixing the member to the actuator. There may be at least one aperture in the rotatable part for selective alignment with the at least one mounting screw so as to provide access for tightening or loosening the fixing.

Specific embodiments of the invention will now be described, by way of example only, with reference to the accompanying drawings, in which:
Figure 1 is a diagrammatic representation of a fluid circuit having a pipeline valve, a valve actuator and pneumatic control circuitry including a flow control device in accordance with the present invention;
Figure 2 is a side view of devices that form part of the control circuitry of figure 1;
Figure 3 is a front view of the devices of figure 2;
Figure 4 shows a directional control valve of the control circuitry supported on the valve actuator by a mounting arrangement in one orientation, shown from one side;
Figure 5 is a front view of the arrangement shown in figure 4;
Figures 6 to 9 show other orientations of the control valve relative to the valve actuator;
Figure 10 is a perspective view of a mounting block to which a valve body is rotatably connected, the mounting block housing a fluid control device in accordance with the present invention;
Figure 11 is a perspective exploded view of the arrangement of figure 10 shown from one side;
Figure 12 is a perspective exploded view of the arrangement of figure 10 shown from an opposite side to that of figure 11;
Figure 13 is a perspective view of the mounting block of figure 10 and 11 rotatably connected to an adapter plate for connection to a valve body;
Figures 14 to 17 are side, front, other side and rear views of the mounting block of figures 10 to 13, shown with a bore for receipt of the fluid control device of the present invention;
Figure 18 is a sectioned view along line B-B of figure 14;
Figure 19 is a sectioned view along line A-A of figure 15;
Figure 20 is a partially sectioned view along line C-C of figure 16;
Figure 21 is a side view of the mounting block of figures 10 to 20 shown with a vent and a clamping member fitted;
Figure 22 is a sectioned view along line A-A of figure 21;
Figure 23 is a perspective view of the mounting block of figures 21 and 22;
Figure 24 is a perspective view from one end of a bi-directional control device in accordance with the present invention;
Figure 25 is a longitudinal section of the device of figure 24;
Figures 26 and 27 are diagrammatic sectioned views illustrating operation of the bi-directional control device;
Figure 28 is a perspective cut-away view of the device of figures 24 to 27;
Figures 29 to 32 are part-cut away perspective views of the mounting block with the bi-directional control device, illustrating their operation;
Figure 33 is a sectioned view of a shuttle of a quick exhaust valve of the mounting block;
Figure 34 is a perspective view of the valve body of figures 10 to 12;
Figures 35 and 36 are front and rear views of the valve body of figure 34;
Figure 37 is a sectioned view along line A-A of figure 36;
Figure 38 is a sectioned view of an alternative embodiment of a flow control device in accordance with the present invention;
Figure 39 is a sectioned view of a further alternative embodiment of a fluid control device in accordance with the present invention.

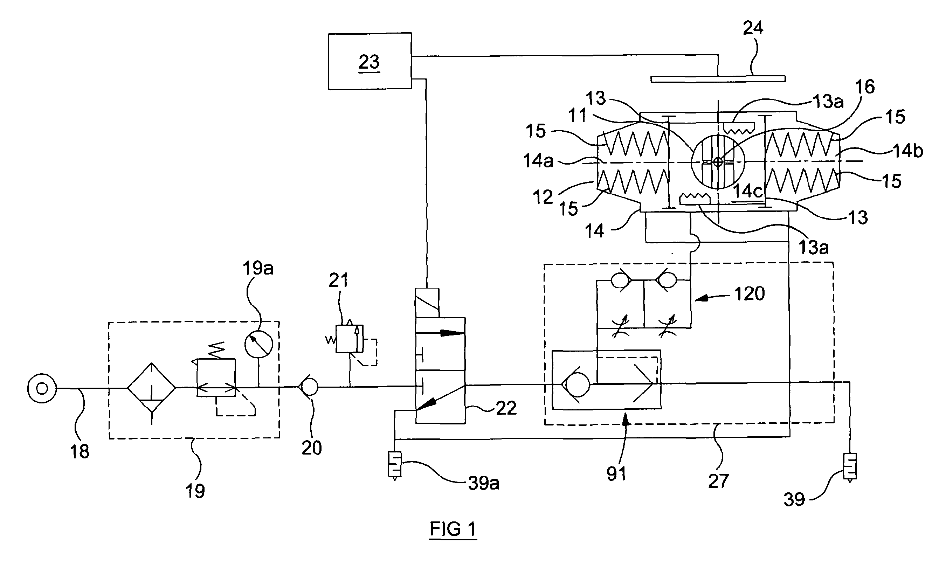

Referring now to figure 1 of the drawings, a pipeline valve (hidden) is operable between open and closed positions by a pneumatically-operated actuator 12. In the embodiment shown the actuator 12 is a rack and pinion type in which a pair of pistons 13 are disposed in a housing 14 (typically a cylinder) for reciprocal movement. Each of the pistons 13 has an integral rack 13a designed to engage with a pinion wheel 11 mounted on a shaft 16 that is in turn connected, directly or indirectly, to an actuating stem of the valve 10. The pistons 13 serve to divide the housing 14 into separate variable volume chambers 14a, 14b and 14c. Springs 15 are disposed in the outer chambers 14a and 14b and serve to bias the piston 13 in a direction against a force applied by compressed air introduced into the central chamber 14c. It will be appreciated that the present invention has application to other actuator types in which air is selectively introduced and/or exhausted from each side of one or more pistons disposed within a housing. Moreover, it is to be understood that the present invention may have application to arrangements using other fluids besides air.

The pipeline valve may be, for example, a ball valve with a ball valve member rotationally disposed within a valve body and an actuation stem that is rotatable by the actuator pinion 11 and shaft 16 via a suitable mechanical coupling. However, it is to be understood that the present invention has application to any type of actuated valve. Moreover, whilst the actuator 12 shown in figure 1 is a spring-return embodiment the present invention has application to a double-acting arrangement where the return movement of the pistons 13 is effected by pressurisation of the outer chambers 14a, 14b whilst the central chamber 14c is exhausted.

Pressurised air for operating the actuator 12 is delivered along a main supply line 18 from an upstream source (e.g. a compressor) via a pneumatic control circuit which can take any suitable form. In the example of figure 1 fluid passes from the source towards the actuator 12 via a filter regulator 19 with pressure gauge 19a, an in-line check valve 20, a pressure relief valve 21 and a normally closed, two-position, three-way solenoid-operated valve 22. Any suitable type of directional control valve may be used in place of the solenoid-operated valve. Fluid returned from the actuator 12 may be exhausted through vents 39 or 39a.

The energisation of the solenoid operator and therefore the position of the valve 22 is controlled by pneumatic pilot control signals generated by a positioner 23 in order to move the actuator 12 to a desired position to operate the valve. A position sensor 24 associated with the actuator 12 may sense the position of the pistons 13 within the housing 14, or the rotational position of the shaft 16, and generate an electrical signal representative of that position, which signal is fed back to the positioner 23. In this manner the positioner 23 may operate with closed-loop feedback control to determine the required pressure of the pneumatic control signal. The positioner 23 may be microprocessor based and may incorporate transducers that convert electrical signals (e.g. current) to pneumatic pressure for this purpose.

The present invention is concerned with a flow control device which in the embodiment of figure 1 forms part of the pneumatic control circuit on the actuator 12. In figure 1, a mounting block, represented schematically by the dotted line 27, is shown between the solenoid operated control valve 22 and the actuator 12. The actuator 12 has a Namur standard interface comprising ports for fluid communication with the chambers 14a, 14b and 14c and threaded fixing bores. Such an interface is well known to those skilled in the art. The mounting block houses a bi-directional flow control device 120 of the present invention and a quick exhaust valve 91 both of which are described in detail later.

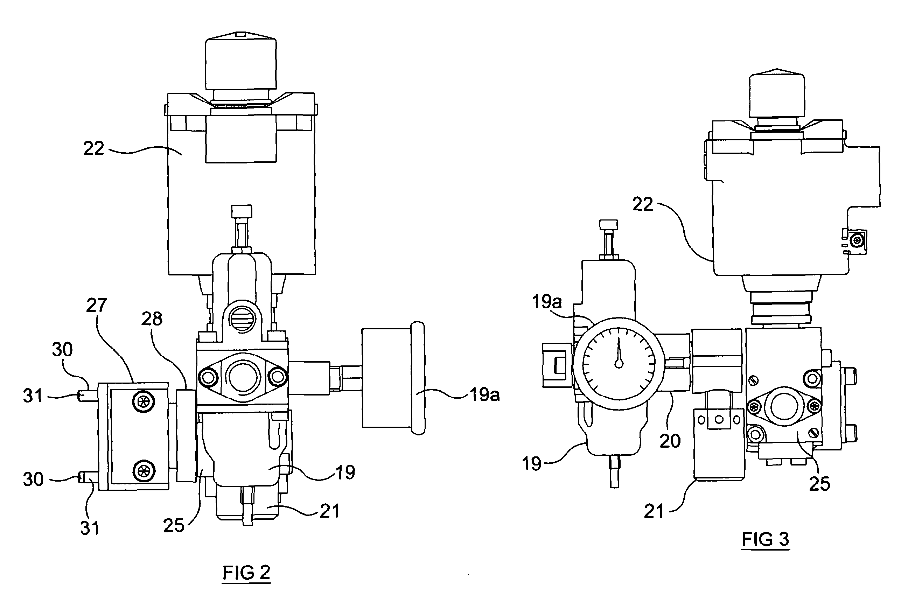

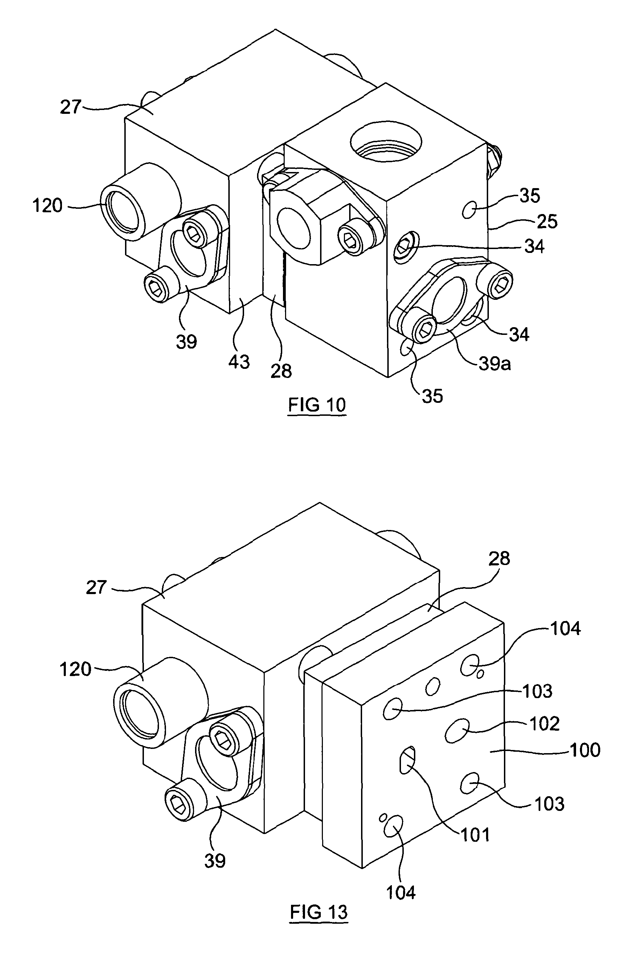

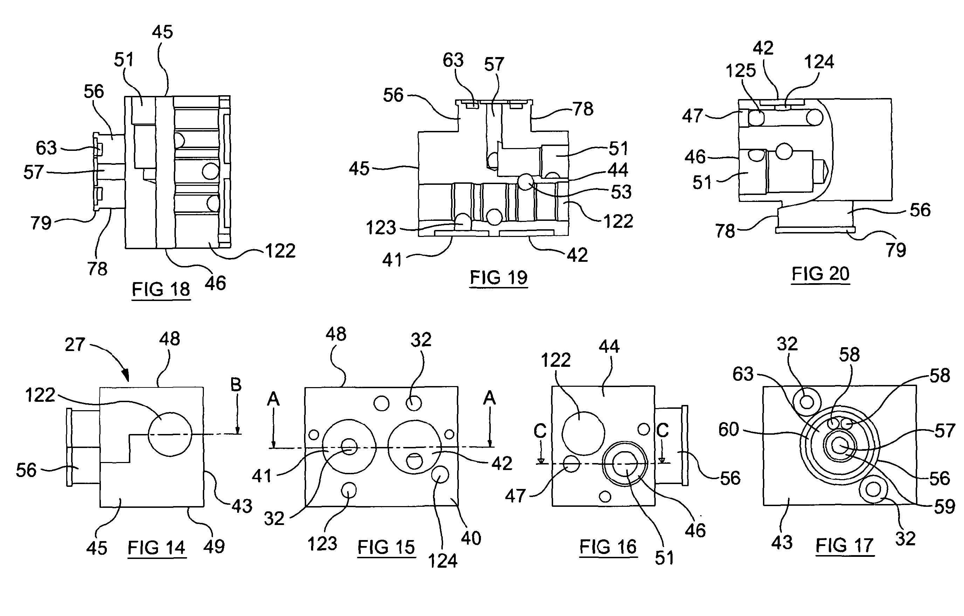

A physical embodiment of part of the pneumatic control circuit of figure 1 is shown in figures 2 and 3, including the solenoid-operated valve 22, the filter regulator 19, pressure gauge 19a, pressure relief valve 21 and check valve 20 all arranged in a stack. The solenoid-operated valve 22 has a valve body 25 (mostly hidden in figure 2) which forms part of a mounting arrangement for connection to a Namur standard interface of the valve actuator 12 (not shown in figures 2 and 3). The mounting arrangement includes the mounting block 27 for connection to the Namur interface and which permits rotation of the valve body 25, and a clamping member 28 interposed between the valve body 25 and the mounting block 27 for selectively locking the valve body against rotation. The mounting block 27 is generally parallelepiped with various ports for connection into the pneumatic control circuit and various bores and tapped bores for receipt of fixings. The ends 30 of threaded shanks of two socket head screws 31 can be seen projecting from mounting bores 32 (not shown in figure 2, but present in figures 10, 12 and 14) in the mounting block 27 in figure 2 and these are designed to connect to corresponding threaded fixing bores defined in the Namur interface on the actuator 12, the screws 31 passing through bores in the block 27.

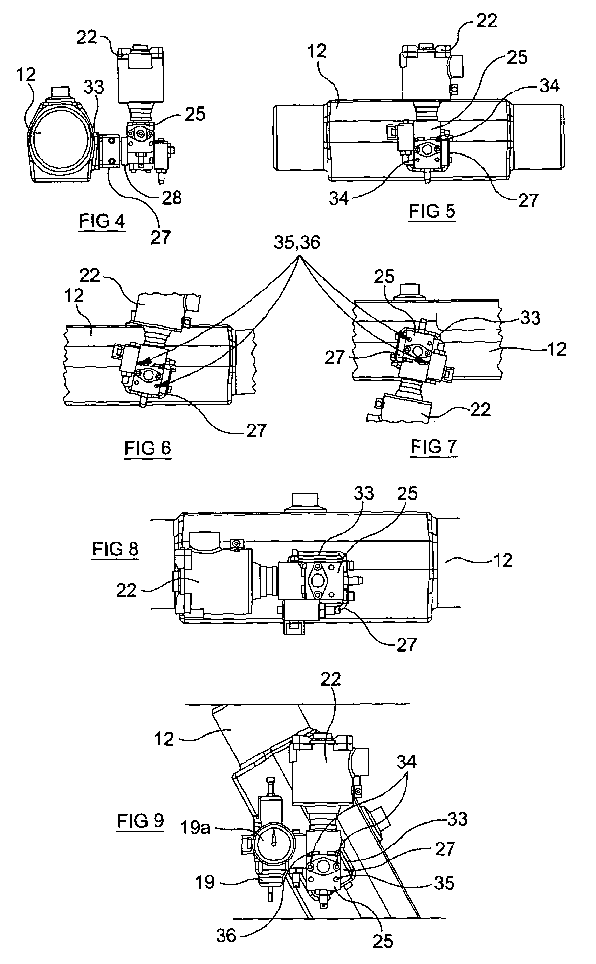

The above arrangement is shown connected to the external Namur interface surface 33 of the valve actuator 12 in figures 4 and 5 with the solenoid-operated valve 22 disposed in a conventional orientation where its longitudinal axis extends substantially perpendicular to the longitudinal axis of the actuator 12. The filter regulator 19, pressure gauge 19a, in-line check valve 20 and pressure relief valve 21 have been omitted for clarity. The ball valve 10 (not shown in figures 4 and 5) is typically connected underneath the actuator 12 with the valve positioner 23 (not shown in figures 4 and 5) typically mounted on top.

Figures 6 to 9 show alternative orientations of the valve body 25 relative to the actuator 12 which can be achieved by releasing the clamping member 28 and rotating the valve body 25 around the mounting block. The clamping member 28 is released by turning locking screws 34 (see figures 5 and 9) to release the clamping force as will be described in more detail below. This allows the valve body 25 to be rotated to any desired position. The positions depicted in figures 6 and 7 are temporary and simply allow the valve 25 to be oriented in such a way that access bores 35, 36 through the valve body 25 and the clamping member 28 are brought into alignment with the heads of the socket head screws 31 that fix the mounting block 27 to the valve actuator 12. This allows the mounting block 27 to be fixed to the interface 33 of the valve actuator 12 with the valve body 25 and other devices already assembled and connected.

In figure 8 the valve body 25 is oriented with its longitudinal axis substantially parallel to that of the actuator 12 and is fixed in that position by tightening the locking screws 34 to effect clamping, the locking screws being received in bores 37 that pass through the valve body 25. This orientation ensures it avoids physical interference with devices mounted to the top of the actuator 12 (such as the positioner 23 which is not shown in figures 4 to 9) and ensures that flame path clearances are maintained. An alternative orientation is shown in figure 9 where the actuator 12 is inclined and the valve body 25 is oriented to ensure the filter regulator 19 (shown in this figure) has an upright attitude. This is desirable as the filter regulator 19 is fitted with a drain which collects moisture that should be drained at regular intervals. In order for the moisture to be drained effectively from the device it should be maintained in the upright attitude. The valve body 25 can again be locked in this position by tightening the locking screws 34 to effect clamping.

It will be appreciated that the mounting arrangement may be designed so that valve body 25 can be selectively clamped in one of an infinite number of positions or there may be a finite number of discrete positions.

Referring now to figures 10-20, the mounting block 27 comprises a body that defines an external front face 40 with a pair of ports 41, 42 for fluid connection to corresponding ports defined on the Namur interface surface 33 of the valve actuator 12, an opposite rear face 43 for fluid connection to the valve body 25, opposed side faces 44, 45 and upper and lower faces 48, 49. One of the side faces 44 has a large side port 46 for connection to optional ancillary devices or a vent 39 (one of which is shown in figures 10 to 13) and a smaller side port 47 for exhaust flow. The ports 41, 42 on the front face 40 are shallow and lined by O-ring seals 50 for sealing against Namur interface surface 33. A first of the ports 41 provides fluid communication between the valve body 25 and the central cylinder chamber 14c and a second of the ports 42 provides fluid communication between the valve body 25 and the outer cylinder chambers 14a, 14b which are occupied by the springs 15.

The side port 46 penetrates into the body of the mounting block 27 where it defines a chamber 51 for fluid communication with the first and second ports 41, 42 on the front face 40.

The mounting block 27 has an integrally formed cylindrical boss 56 that projects from the rear face 43 and is designed to support the clamping member 28 as will be described below. The boss 56 is penetrated by a central flow passage 57 that provides communication between the chamber 51 and a feed port of the valve body 25 and two radially outer fluid passages 58 that provide fluid communication between the second port 42 and an exhaust port of the valve body 25. A plurality of annular recesses are defined in the end face of the boss 56: radially inner and outer recesses 59, 60 for O-ring seals 61, 62 and an intermediate recess forming an annular channel 63 for fluid flow into which the outer passages 58 emerge. The radially inner recess 59 surrounds the central flow passage 57 and receives a first O-ring seal 61 for sealing against the valve body 25 to ensure that fluid does not leak from the central flow passage 57 into the annular channel 63 or vice versa. Similarly, fluid is prevented from leaking from the annular channel 63 to the surrounding environment by the radially outer O-ring seal 62 that is located immediately outboard of the annular channel 63.

The mounting block 27 is shown clamped to the rotatable valve body 25 in figures 10-12. In this instance the valve body 25 is compatible with the mounting block 27 in that the feed and exhaust ports in the valve body are in fluid communication with the central flow passage 57 and the outer fluid passages 58 in the mounting block 27. In an alternative embodiment, shown in figure 13, the mounting block 27 is connected to a valve body 25 via an intermediate adapter plate 100 that effectively renders the mounting block 27 compatible with alternative valve body designs. It will be appreciated that adapter plates 100 of various designs can be supplied with the mounting block 27 to render it compatible with different valve bodies 25 or the adapter plate can be manufactured in a bespoke fashion to provide a suitable interface with the valve body 25 and the mounting block 27. In order that the valve body 25 is selectively rotatable relative to the mounting block as before, the adapter plate 100 is designed to rotate on the boss 56 and be clamped by clamping member 28 in the same manner as described in relation to the valve body 25.

The adapter plate has a feed bore 101 and an exhaust bore 102 for directing air supply and return between the actuator and the valve body and is penetrated by bores 103 for receipt of the locking screws 34 and bores 104 for access to the socket head fixing screws 31 of the mounting block 27.

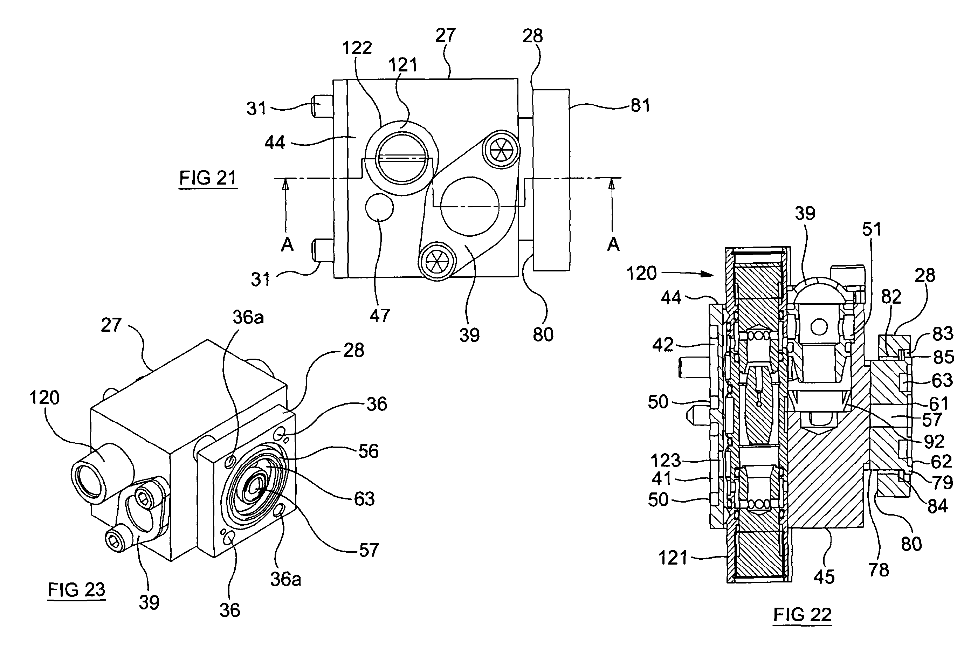

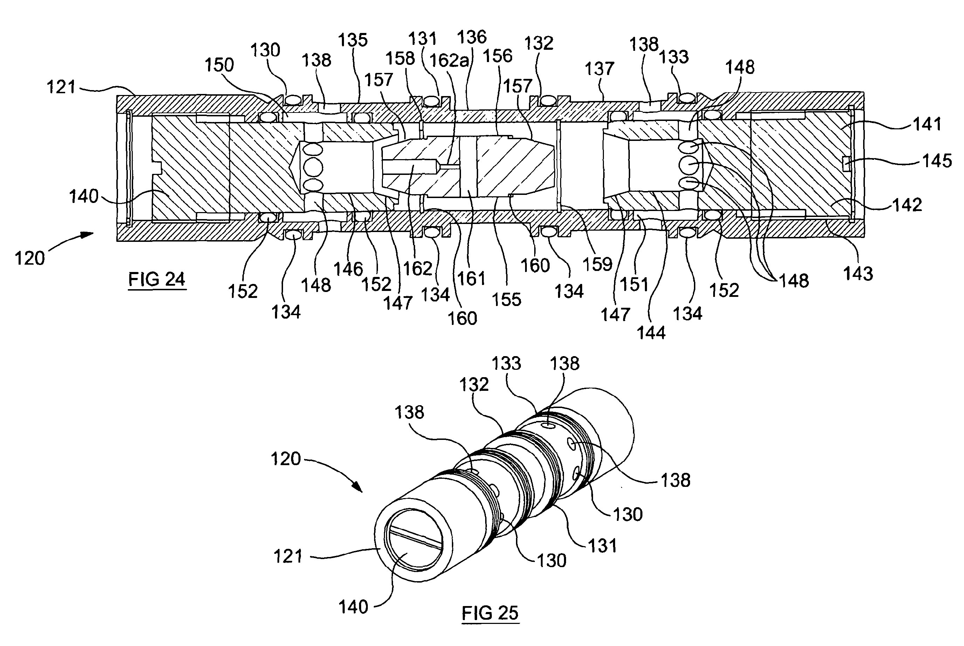

In order to control the speed of flow of air to and from the central chamber 14c the mounting block 27 is provided with a bi-directional flow control device 120, which is depicted in figures 10-13 and 21-32 but is shown most clearly in figures 24 and 25. It is in the form of a cartridge and comprises a generally cylindrical hollow body 121 that is disposed in the mounting block 27 adjacent to the first and second ports 41, 42 and such that its longitudinal central axis extends in a direction that is generally perpendicular to the flow into and out of those ports 41, 42. The body 121 resides in a cylindrical bore 122 of the mounting block 27 that extends between the two side faces 44, 45 and has a length that is greater than that of the bore 122 such that its ends project beyond the side faces 44, 45. The cylindrical bore 122 is in communication with the first and second ports 41, 42 via respective short bores 123, 124, with the two outer fluid passages 58, and with the side port 46 via two perpendicular passages 125,126, a first 125 of which extends from an opening in the bore 122 and extends to the smaller side port 47 and a second 126 of which extends from the smaller side port 47 to the larger side port 46. However, as will become apparent only air to and from the port 41 flows through the interior of the body 121.

The bi-directional control device 120 has an external surface with four annular grooves 130, 131, 132, 133 that receive O-ring seals 134. In the space between pairs of adjacent seals 134 the external surface has a reduced diameter such that when the body 121 is received in the cylindrical bore 122 there are three annular clearances that serve as external flow paths 135, 136, 137 for fluid to flow around the surface of the body 121. The body 121 is penetrated by two arrays of radial apertures 138 each arranged around the circumference to provide fluid communication between an outer two of the flow paths 135, 137 and the hollow interior of the body 121. The apertures 138 thus serve as first and second sets of ports for allowing fluid into or out of the body 121. It will be understood that any number of such radial apertures 138 may be provided including one for each flow path 135, 137. Each end of the interior of the body is closed by a flow screw 140, 141 that has a head 142, whose outer periphery is threaded for engagement with a corresponding thread 143 defined in the internal surface of the body 121, and a shank 144 which is hollow at an end distal from the head 142. Access to an end surface of each head 142 is provided through the otherwise open end of the body 121, the head having a slot 145 for engagement with a screwdriver or similar tool such that the screw can be rotated to adjust its axial position. The hollow end of each shank 144 is provided by a central blind bore 146 that extends substantially in parallel to the bore 122 in the body 121. The blind bore 146 is defined by an internal surface of the shank 144 which is generally circular in cross-section and tapers outwardly at its open end distal the head 142 to define a substantially frustoconical seat 147. The hollow part of the shank 144 is penetrated by an array of equi-angularly spaced radial apertures 148 that provide fluid communication between an external surface of the shank 144 and the blind bore 146 at a location spaced from the seat 147.

The internal surface of the body 121 is substantially cylindrical but is stepped to define different diameters. As described above, the body 121 is penetrated by two arrays of radial apertures 138 which extend from the external annular flow paths 135, 137 and emerge on the interior side of the body 121 into internal annular flow paths 150, 151 that are defined by annular recesses formed in the interior surface of the body 121. The internal annular flow paths 150, 151 are in fluid communication with the radial apertures 149 in the respective flow screws 140, 142 and are sealed from the rest of the interior of the body by a pair of axially spaced O-ring seals 152 received in annular grooves defined on either side. Each path 150, 151 thus provides a radial clearance between the body 121 and the respective flow screw 140, 141.

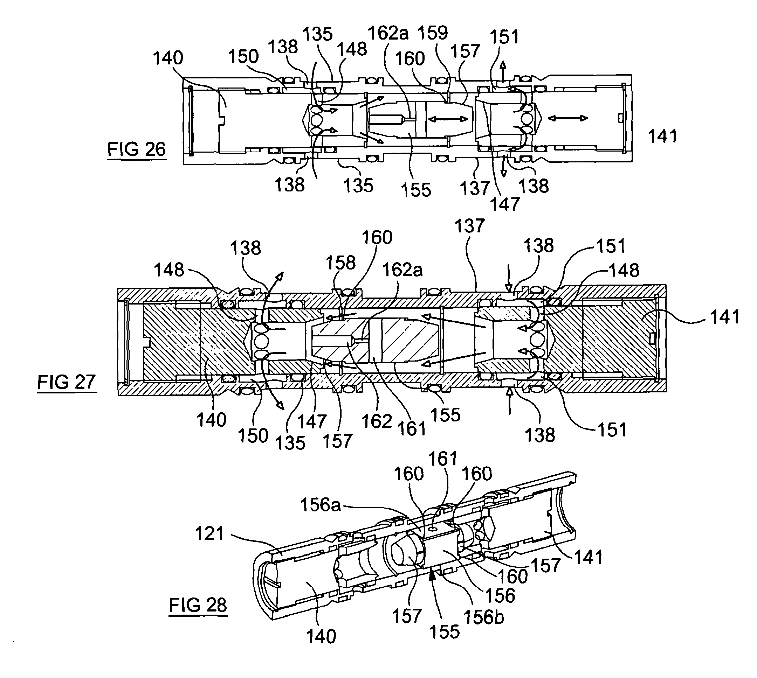

In the central area of the interior of the body 122 there is a floating shuttle member 155 that is axially moveable under the influence of fluid pressure between the frustoconical seats 147 defined on the open ends of the flow screws 140, 141. The shuttle member 155 is shown in section or cut-away in figures 24, 26-27, and 29-32 but its external profile can be most clearly seen from figure 28. It comprises a central section 156 which is substantially square in cross-section and outer end portions that are cylindrical immediately adjacent to the central section 156 and then taper inwardly to provide a frustoconical profile. These frustoconical end portions 157 serve as valve elements that interact with the frustoconical seats 147 much in the same manner as a needle valve operates. The axial travel of the shuttle member 155 is limited in each direction by a circlip 158, 159 that is received in an annular groove in the inside surface of the body 121. A first circlip 158 is disposed between the first flow screw 140 and the central section 156 of the shuttle member 155 and a second circlip 159 is disposed between the second flow screw 141 and the central section 156. The inner edge of each circlip 158, 159 has a diameter that is greater than the largest diameter of the frustoconical end portions 157 but smaller than the radial dimensions of the central section 156 such that the ends 157 may pass through the respective circlip 158, 159 but the central section 156 is prevented from doing so. At end faces of the central section 156 there are four axially projecting stop members 160, one at each corner, for abutment with the circlip 158, 159. These ensure that when the shuttle member 155 reaches the end limit of its travel fluid can still flow between it and the circlip on the basis that sealing contact is made with the circlip 158, 159 only at the four spaced stop members 160 leaving axial clearances between the end face of the central section 156 and the circlip 158, 159 in the region between the stop members 160.

The central section 156 of the shuttle member 155 is penetrated by a through bore 161 that extends between upper and lower faces 156a, 156b of the central section in a direction perpendicular to the axis of the body 121. A further bore 162 extends from the centre of one end portion 157 and intersects with the through bore 161 at a right angle. The further bore 162 has a small diameter portion 162a for limiting the flow therethrough.

The axial position of the flow screws 140, 141 and the relative position of the shuttle member 155 determine the fluid flow rate through the device, the position of the flow screws being adjustable by virtue of the threaded engagement of the head 142 and the inside surface of the cylindrical body 121. The travel of the flow screw 140, 141 into the body 121 is limited by abutment with a respective circlip 158, 159 and the end of the screw shank 144 has an annular recess in its outer surface for receipt of the circlip 158, 159. This movement is accommodated by the axial length of each of the internal annular flow paths 150, 151 such that there is no loss of fluid communication between the flow screws 140, 141 and the external annular flow paths 135, 137.

In operation, the bi-directional flow control device 120 allows flow in either direction along the inside of the body 121 and provides independent regulation of the flow rate of fluid flowing between the external annular flow paths 135 and 137.

Figure 26 illustrates operation when the fluid flows flow left to right, entering the body 121 from the external annular flow path 135 via radial apertures 138 as indicated by the arrows. When the device 120 is used in the mounting block 27 this fluid is air that flows from the valve body feed port and is introduced into the mounting block 27 via the central flow passage 57 for supply to the central chamber 14c of the actuator 12. The fluid enters the internal annular flow path 150, flows into the flow screw 140 via the radial apertures 148 and then encounters the shuttle member 155. On the other side of the shuttle member 155 the flow screw 141 is in fluid communication with the central chamber 14c of the actuator via first port 41, external annular flow path 137, radial apertures 138 in the body 121 and internal annular flow path 151. Since the pressure of the air from the valve body feed is greater than that in the central chamber 14c the shuttle member 155 is forced to the right against the stop provided by circlip 159. Air flows out of the first flow screw 140 around the shuttle member 155, between the stop members 160 and the circlip 159 and into the open end of the second flow screw 141. From there the air egresses through the radial apertures 148 to the internal annular flow path 151, out through the radial apertures 138 in the body 121 to the external annular flow path 137 and first port 41. The flow rate of the air is determined by the axial clearance between the frustoconical surface of the right hand end 157 of the shuttle member 155 and the corresponding frustoconical seat 147 of the second flow screw 141. This flow rate can be altered in advance or otherwise using a screwdriver or other suitable tool to adjust of the axial position of the second flow screw 141 so as to vary the clearance that exists between the frustoconical surface 157 and the seat 147 when the shuttle member 155 is at the right-hand extremity of its travel length.

Figure 27 illustrates flow in the opposite direction from right to left. In this instance fluid flows from the external annular flow path 137 into the body 121 via radial apertures 138 to the internal annular flow path 151 and then into the second flow screw 141 via the radial apertures 148, as indicated by the arrows. In the context of the mounting block 27 this is the direction of air flow when the valve 22 is de-energised and the air supply to the actuator 12 is shut off. In this circumstance the supply of air to the central chamber 14c of the actuator 12 is interrupted and the force applied by the springs 15 is now greater than that applied by the pressure in the central chamber 14c such that the pistons 13 move towards each other and air is expelled from the central chamber 14c to the first port 41 in the mounting block 27. On the other side of the shuttle member 155 the external annular flow path 135 is in communication with the feed port of the valve body 25 and is therefore at a lower pressure than that flowing from the second feed screw 141 to the shuttle member 155. As a result the shuttle member 155 is forced to move from right to left and into abutment with the circlip 158. The air from the second flow screw 141 flows around the shuttle member 155 and passes through the clearances between the stop members 160 and the circlip 158 into the first flow screw 140 and out through the radial apertures 148, the internal annular flow path 150, the radial apertures 138 to the external annular flow path 135. The rate of flow is controlled by the axial position of the first flow screw 140 and in particular by the clearance between the frustoconical seat 147 defined on the screw 140 and the frustoconical surface 157 defined on the end of the shuttle member 155. The flow in this direction allows the central chamber 14c of the actuator to be exhausted.

In both flow directions the respective flow screw 140, 141 that is used to control the flow rate can be adjusted to a position where the frustoconical surface 157 seals against the seat 147 thus preventing flow between them regardless of the pressure difference. In the case where pressure at the external annular flow passage 137 on the right is greater than that at the passage 135 on the left a small flow is permitted by virtue of the bores 161, 162 in the shuttle 155 which allow a small bypass flow into the first flow screw 140, the flow rate being determined by the size of the small diameter bore 162a.

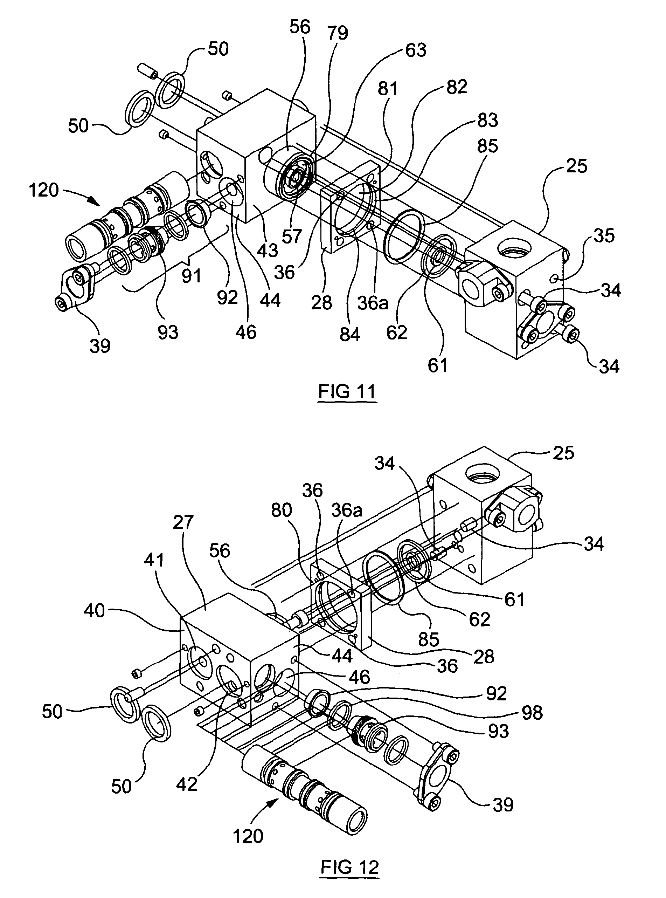

The mounting block 27 incorporates a quick exhaust valve that allows rapid exhaust of the central chamber 14c. The quick exhaust valve 91 (shown in figures 11, 12, 29 and 31) is housed in the chamber 51 of the mounting block 27 and comprises a shuttle 92 that is moveable axially in the chamber 51 towards and away from a shuttle seat 93 located adjacent to the larger side port 46. The shuttle 92 is disposed between the shuttle seat 93 and the central flow passage 57 and is in the form of a solid disc of elastomeric material with a peripheral skirt 94 that flares outwardly (see figures 11, 12 and 33). The shuttle seat 93 is generally in the form of a hollow cylinder with a first end that defines an annular seating surface 95 against which the shuttle 92 comes into sealing contact and a second end 96 that is penetrated in the radial direction by a plurality of apertures 97. At a location between the first and second ends, the outer surface of the seat 93 receives an annular seal 98 that seals against the wall of the chamber 51 to prevent air flow around the outside of the seat between the first and second ends. Between the annular seal 98 and the shuttle 92 there is a bore 53 in the mounting block 27 that provides fluid communication between the chamber 51 and the external annular flow path 135 around the body 121 of the flow control device 120. On the other side of the seal 98 there is a further bore 54 that provides fluid communication between the chamber 51 and the short bore 124 that is connected to the port 42.

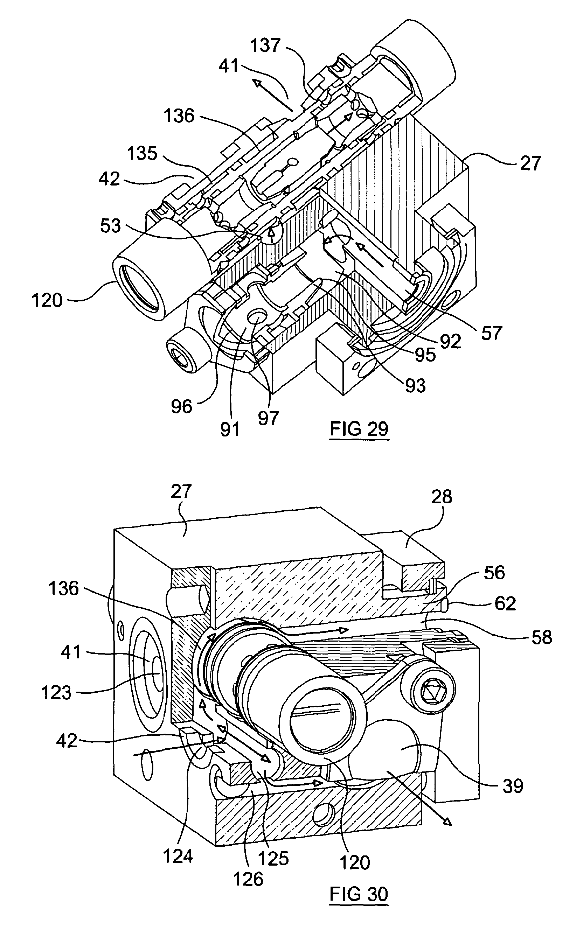

Figures 29-32 illustrate the operation of the bi-directional flow control device 120 in the mounting block 27. The components are partly cut-away so as to reveal the air flow paths.

Figure 29 illustrates air being supplied to the central chamber 14c of the actuator 12. Air is delivered via the energised valve 22 to the central flow passage 57 in the boss 56 on the rear face 43 of the mounting block 27. From there it passes into the chamber 51 and pressure acts on the right hand face of the shuttle 92 (as shown in figure 29) so as to move it on to the annular seating surface 95 of the shuttle seat 93. In this position air cannot flow along the inside of the shuttle seat 93 and to the side port vent 46 but is incident on the annular skirt 94 which deflects radially inwards as a consequence. The air thus cannot enter the quick exhaust valve 91 and is forced to flow instead through the bore 53 into the external annular flow path 135 from where it enters the bi-directional flow control device 120 as described above in relation to figure 26. The quick exhaust valve 91 is thus closed in the manner of a check valve.

As described above the fluid in the flow control device 120 is directed to the central chamber 14c of the actuator 12 through the first port 41 in the mounting block 27 and the corresponding feed port for central chamber 14c defined on the Namur interface surface 33 of the valve actuator 12. At the same time as air is introduced into the central chamber 14c it is also expelled from the outer chambers 14a and 14b via a port on the Namur interface 33 since the supply of air pressure to the chamber 14c forces the pistons 13 to move against the biasing force of the springs 15. As illustrated in figure 30, the air is exhausted from the spring side (by virtue of the reduction of volume of the chamber on that side) and flows through the port in the Namur interface to the second port 42 in the mounting block 27, through short bore 124 and into a first of the perpendicular passages 125. From there the air can flow to the left where it encounters the central external annular flow passage 136 of the fluid control device 120 and flows out through one or both of the outer fluid passages 58 so that it can be vented through the valve body 25. In addition, or alternatively, if the side port 46 is not blocked it may flow to the right where it passes into the second of the perpendicular passages 126 to the side port 46 and vent 39 from where it is exhausted. There may also, or alternatively, be provided a vent port in the front face of the mounting block, particularly if the side port 46 is blocked by a blanking plate. It will be understood by the skilled person that vents may be selectively blocked by appropriate bungs, plugs or blanking plates as required.

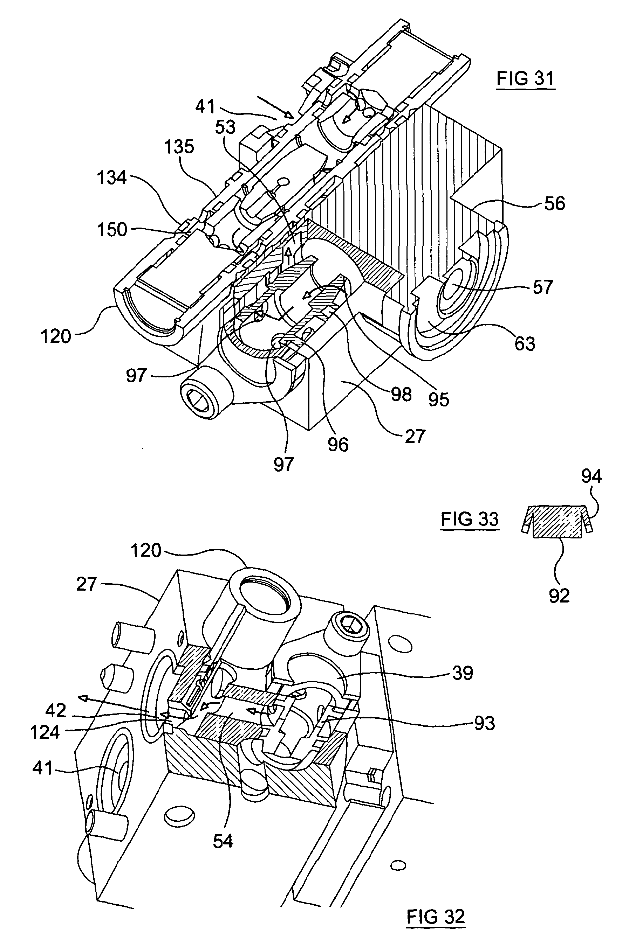

Figure 31 illustrates the flow of air in the instance where the valve is de-energised so that air supply pressure to the central chamber 14c of the actuator 12 from the main supply line 18 is interrupted by the valve 22 and there is no supply of compressed air to the actuator 12. In this instance the springs 15 force the pistons 13 inwardly so that air is evacuated from the central chamber 14c through the port in the Namur interface surface 33 to the port 41 and into the bi-directional control device 120. The flow through the device 120 follows that described in relation to figure 27 such that it emerges at the external annular flow path 135, as indicated by the arrows. From there it enters the chamber 51 through bore 53 and forces the shuttle 92 away from the shuttle seat 93 thus opening the quick exhaust valve 91. The air pressure acts on the underside of the skirt 94 of the shuttle 92 such that it is forced radially outwards to seal against the wall of the chamber 51. This prevents the air from passing into the central fluid passage 57 and forces it to pass along the interior of the shuttle seat 93 (the outer periphery being sealed by annular seal 98 against the wall of the chamber 51). If the side port 46 is closed by the blanking plate such that there is no vent 39 the air is forced radially outwards through the apertures 97 and circulates around the second end of the shuttle seat 93 before it egresses through bore 54 to the short bore 124 and the port 42, as shown in figure 32. In this manner the air is routed to the port on the Namur interface surface 33 that is connected to the outer chambers 14a, 14b occupied by the springs 15. This arrangement allows air flowing out of the central chamber 14c to be recirculated to the other chambers 14a and 14b to assist the spring forces in reducing the volume of the central chamber 14c.

In an alternative embodiment where the quick exhaust valve is not required or if the actuator pistons 13 are non-spring return types, then the quick exhaust valve shuttle 92 and seat 93 are replaced in the chamber 51 by a bung (not shown). In this instance air from the valve 22 is delivered to the chambers 14a, 14b to force the central chamber 14c to exhaust.

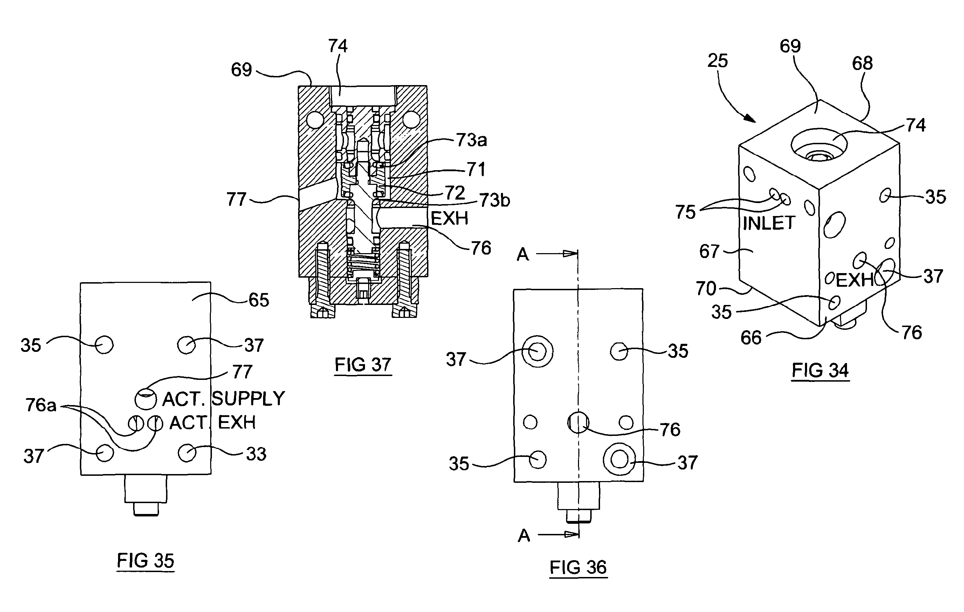

The valve body 25 is shown in more detail figures 10 to 12 and 34 to 37. It is generally parallelepiped with a front face 65, a rear face 66, side faces 67, 68, upper face 69 and lower face 70. A first bore extends between the upper and lower faces 69, 70 and defines a valve chamber 71 for receipt of the valve element 72 which is operated by the solenoid (shown in figures 2 to 9). The valve element 72 can take any suitable form but in the particular embodiment shown is a spring-biased normally closed poppet-type valve element for axial reciprocation between upper or lower seat 73a, 73b. The solenoid is received in threaded engagement with the wall of an enlarged opening 74 in the upper face 69 and has a plunger (not shown) for connection to the valve element 72 for controlling reciprocation of the valve element 72. The internal operation of the valve is not important for understanding the present invention and therefore will be described only in general terms in order to provide an understanding of the directions of flow of air to and from the mounting block 27. One of the side faces 67 has a pair of air supply bores 75 for fluid communication with the main supply line 18 and these provide fluid communication with an upper part of the valve chamber 71 above the upper valve seat 73a. The rear face 66 of the valve body is penetrated by an exhaust bore 76 for directing exhaust fluid to a suitable vent. The exhaust outlet bore 76 is in fluid communication with a lower part of the valve chamber 71 below the lower seat 73b. Exhaust fluid is supplied from the actuator 12 to the valve body via two small exhaust inlet bores 76a that provide fluid communication between the outer fluid passages 58 of the mounting block 27 and the lower part of the valve chamber 71.

The front face 65 of the valve body 25 is penetrated by a feed port 77 for supplying air to the actuator 12 and which is in fluid communication with a central part of the valve chamber 71 generally between the valve seats 73a, 73b. When connected to the mounting block 27 the feed port 77 is in fluid communication with the central flow passage 57 in the boss 56 of the mounting block 27.

The valve body 25 is also penetrated by a first pair of bores 37 that extend between the front and rear faces 65, 66 and are designed to receive the locking screws 34, and a second pair of bores 35 that provide access for the mounting screws 31 of the mounting block 27.

The valve will be normally closed (i.e. when the solenoid is de-energised) such that the upper part of the valve chamber 71 is sealed from communication with the central or lower parts by means of the valve element 72 being sealed to the upper valve seat 73a. In this position the air supply bores 75 (and therefore the main supply line 18) are blocked from communication with feed port 77 so that pressurised air is not supplied to the actuator 12.

The exhaust bores 76a receiving exhaust fluid from the actuator 12 are permanently in communication with the exhaust bore 76 so as to allow exhaust fluid to pass to vent.

When the solenoid is energised the valve element 72 is moved off the upper seat 73a and into sealing engagement with the lower seat 73b. This has the effect of bringing the air supply bores 75 into fluid communication with the actuator feed port 77 whilst blocking the from communication with the exhaust flow path through bores 76 and 76a so that pressurised fluid is supplied to the actuator 12.

The valve body 25 is rotatable about an axis that is substantially coaxial with a central longitudinal axis of the central flow passage 57 so that alignment of the latter with the feed port 77 is maintained. As the body 25 rotates about this axis, the exhaust bores 76a describe a circle that is aligned with the annular channel 63. The configuration of seals and recesses thus allows exhaust air from the actuator 12 that egresses through the outer flow passages 58 in the mounting block 27 to flow into and around the annular channel 63 and out through the exhaust bores 76a in the valve body 25, regardless of the rotational orientation of the valve body 25. In this particular embodiment there is a pair of exhaust bores 76a and a pair of outer fluid passages 58 to ensure adequate volumetric flow rate without having to increase the size of the valve body 25 and mounting block 27. It is to be appreciated that in an alternative embodiment there may be a larger single exhaust bore 76a and larger single outer fluid passage 58.

Referring now to figures 10 to 13, 18 to 20 and 22 to 23 in particular, the external peripheral surface of the boss 56 on the mounting block 27 is recessed at 78 for receipt of the clamping member 28 which, in use, clamps the end face of the boss 56 to the valve body 25 such that the O-ring seals 61, 62 are compressed and provide effective sealing. This recess 78 leaves an annular lip 79 defined at the end of the boss 56 through which the clamping force is transmitted in use.

The clamping member 28 is approximately square in outer profile with a front face 80, a rear face 81 and a circular opening 82 that has a diameter slightly larger than the outer diameter of the lip 79 so that the boss 56 can pass through the opening 82. The rear face 81 (which faces the valve body 25) has a circular recess 83 such that a rear-facing shoulder 84 is defined by the clamping member 28. A spiral retaining ring 85 is disposed between the shoulder 84 and the lip 79 on the boss 56 and has an inner diameter that is less than the outer diameter of the lip 79 so as to retain the clamping member 28 on the boss 56. A ring of this kind typically comprises two or more turns of an elongate thin strip of material having a rectangular cross-section. When the locking screws 34 are tightened they serve to draw the clamping member 28 over the boss 56 towards the valve body 25 but it is prevented from moving past the lip 79 by the spiral retaining ring 85 which is compressed between shoulder 84 and the lip 79. The clamping force is transmitted from the shoulder 84 of the clamping member 28 through the spiral retaining ring 85 to the lip 79 of the boss 56 so that the boss is pulled on to the front face 65 of the valve body 25 and sealing is effected via the compressed O-ring seals 61, 62. In so doing the valve body 25 and clamping member 28 are locked against rotation relative to the mounting block 27 and therefore relative to the valve actuator 12.

The clamping member 28 has a first pair of bores 36 that afford access to the mounting screws 31, when the clamping member is rotated to an orientation where the bores 36 are aligned to the screws 31. It also has a second pair of tapped bores 36a which are designed to engage with the locking screws 34.

In order to rotate the valve body 25 relative to the actuator 12 the locking screws 34 are loosened so that the clamping member 28 is released from clamping engagement with the lip 79 but the screws 34 remain engaged in the tapped bores 36a so as to maintain the clamping member 28 and valve body 25 in a fixed rotational relationship. This allows the clamping member 28 to rotate about the external peripheral surface of the boss 56 as the valve body 25 is rotated. The screws 34 are then tightened in the new position to clamp the valve body 25 in position once again. Since the rotation occurs about the longitudinal axis defined by the central flow passage 57 in the mounting block 27 and the feed port 77 in the valve body 25, the exhaust bores 76a orbit the axis in a circle and regardless of the new orientation of the valve body 25 they remain in flow communication with annular channel 63. In this manner flow communication between the actuator 12 and the valve body 25 is not interrupted by rotation of the valve body 25.

In operation, when the valve 22 is de-energised the spring force on the pistons 13 may be greater than that applied by the prevailing pressure in the central chamber 14c in which case the pistons 13 move and air is evacuated from the chamber 14c through the port in the Namur interface 33, the first port 41, through the bi-directional flow control device 120 and then redirected to the outer chambers 14a, 14c as described above. In an alternative arrangement the air may be directed to the exhaust flow path through the valve body 25 to vent 39a or to an alternative vent, such as 39, provided in the mounting block.

When the solenoid is energised to open the valve 22 air is supplied from the main supply line 18 to the central chamber 14c via the supply bores 75 and the feed port 77 in the valve body 25, the central flow passage 57 in the mounting block 27, the flow control device 120 to the first port 41 and the corresponding port in the Namur interface 33 of the actuator 12. The pressurisation of the central chamber 14c acts against the spring force and the outer chambers 14a, 14b decreases in volume. As this happens air from the outer chambers 14a, 14b is allowed to vent through the second port 42, and the flow control device 120 to the outer flow passages 58 of the mounting block 27 to the inlet exhaust bores 76a and outlet exhaust bore 76 in the valve body 25. As described above the exhaust air may alternatively be directed in part or in whole to the vent 39 in the mounting block 27.

It will be appreciated that the precise configuration of the air supply and exhaust paths may be varied whilst not departing from the scope of the present invention. For example, pressurised air may be supplied to the annular channel 63 and the outer flow passages 58 in an alternative valve body and/or mounting block configuration.

The valve mounting arrangements described are configured such that the mounting block 27 can be mounted on, and fastened to, the Namur interface 33 of the actuator 12 with the devices of the pneumatic control circuit present. The access bores 35, 36 through the valve body 25 and clamping member 28 permit the captive mounting screws 31 to be fastened into threaded fixing bores on the Namur interface 33. This enables the supplier to provide a complete assembled kit for installation on the actuator as opposed to providing multiple separate devices, ancillary components and accessories, or sub-assemblies of such devices, components and accessories, which the end user has to install.

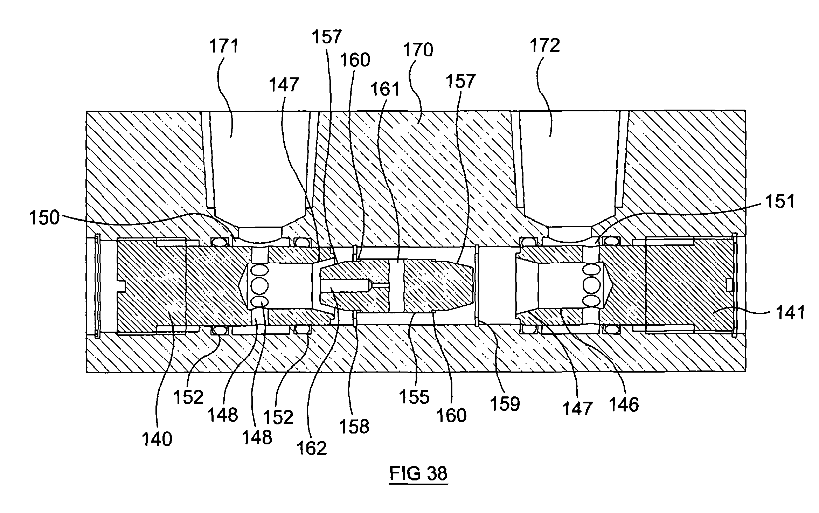

Figure 38 shows an embodiment of a flow control device 120 in the form of a separate component for connection at the appropriate position into the pneumatic supply circuit. This is an alternative to the above described embodiment in which the device is housed with the mounting block. Such a device can be used in applications where the mounting block is not used or alternatively can be separately connected to the mounting block. It will also be appreciated that it may be used in other applications to control the speed of flow of fluid in two opposite directions.

The device 120 will be described only in so far as it differs from that of the previous embodiment and, for convenience, using the same reference numerals. Instead of the device being embodied in a cylindrical cartridge body it takes the form of a rectangular housing 170 in which the bore 122 defined. The internal annular flow passages 135, 137 are in flow communication with first and second ports 171, 172 that extend in a substantially radial direction relative to the central longitudinal axis of the bore 122. The ports 171, 172 may conform to a standard size and configuration and are tapped for connection to other pneumatic flow components. For example they may be NPT standard ports.

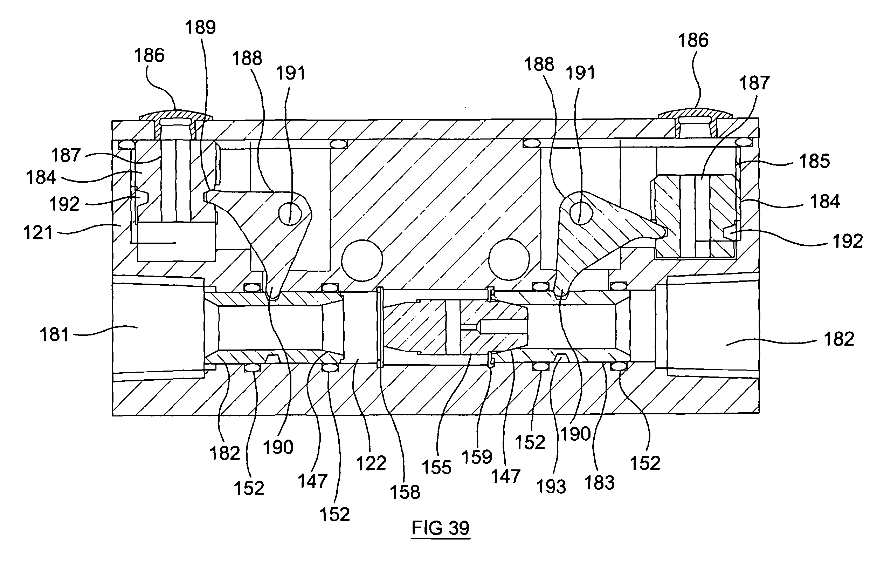

Figure 39 illustrates an embodiment of the bi-directional control device in which fluid flows in a straight line between first and second ports 180, 181. The fluid flow through this embodiment of the device may be less turbulent compared to that through the device of figure 24. Components that are substantially identical to their counterparts in the embodiment of figure 24 are given the same reference numerals. As in the embodiment of figure 38, the ports 180, 181 are NPT-type ports which are tapered and threaded for easy fitment into an existing fluid flow control system. The ports 180, 181 are axially aligned with the bore 122 and the valve seats 147. In this embodiment the valve seats 147 are defined on hollow cylindrical members 182, 183 which are axially slidable within the main bore 122 rather than being adjusted by a threaded connection. The axial position of a cylindrical member 182, 183 is adjusted by turning a respective threaded screw 184 disposed in a threaded bore 185 in the body 121 at the top of the device. Access to the screws 184 is available by removing a respective cap 186. Each screw 184 has a broached hexagonal bore 187 that is designed to receive a hex key. Rotation of the screw 184 causes it to translate along the threaded bore in a direction perpendicular to the axis of the main bore 122. This movement is translated into axial movement of the valve seat 147 by a pivotal lever 188 which has lobes 189 and 190 disposed substantially perpendicular to one another, a first 189 of which is engaged in an annular recess 192 in the threaded screw 184 and a second of which is engaged in an annular recess 293 in the cylindrical member 182, 183. Movement of the screw 184 along its threaded bore 185 effects movement of the first lobe 189 such that the lever pivots in a clockwise or anticlockwise direction about a pivot pin 191 and the second lobe forces the cylindrical member 182, 183 to slide. The right hand cylindrical member 183 is shown in figure 39 as being at one extreme of its length of travel such that the valve seat 147 is sealed against the end of the shuttle member. This illustrates how flow through the device may be interrupted.

It is will be appreciated by one of ordinary skill in the art that the invention has been described by way of example only, and that the invention itself is defined by the claims. Numerous modifications and variations may be made to the exemplary design described above without departing from the scope of the invention as defined in the claims. For example, the precise shape and configuration of the various components may be varied. The boss 56 may be defined on the valve body 25 with the clamping member 28 being designed to move away from the valve body to effect clamping. In a further alternative the annular channel 63 may be defined in the valve body 25 for communication with the exhaust bores 76a and outer passages 58.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be considered as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A flow control device (120) comprising a body (122) having a first fluid port (41) and a second fluid port (42), a first valve seat (147) in fluid communication with the first fluid port (41) and a second valve seat (147) in fluid communication with the second fluid port (42), the first and second valve seats (147) spaced apart in the body to define a clearance between them, a fluid pressure actuated floating valve member (155) in the clearance and arranged to travel in a direction towards the first valve seat (147) and away from the second valve seat (147) and in the opposite direction depending on the prevailing fluid pressures at the first and second fluid ports (41, 42), the valve member (155) having opposed first and second ends (157) for co-operation with the first and second valve seats (147), at least one stop (158, 159) for limiting the travel of the valve member (155) towards the first or second valve seat (147), at least one of the first and second valve seats (147) being adjustable to vary Its position relative to the valve member (155).

2. A flow control device according to claim 1, wherein at least one of the first and second valve seats (147) are tapered, and preferably defines a substantially frustoconical surface.

3. A flow control device according to claim 2, wherein at least one of the first and second ends (157) of the valve member (155) is tapered to complement the tapered one of the first and second valve seats (147).

4. A flow control device according to claim 2, wherein at least one of the first and second ends (157) of the valve member (155) defines a frustoconical surface for sealing against the corresponding frustoconical surface on the first or second valve seat (147).

5. A flow control device (120) according to any preceding claim, wherein the valve member (155) comprises a central body (156) between the first and second ends (157), the central body (156) being configured to come into abutment with the at least one stop (158, 159), the central body (156) preferably defining at least one projection for abutment with the at least one stop (158,159).

6. A flow control device (120) according to claim 5, wherein the at least one projection Is configured such that when in abutment with the stop (158, 159) there is a clearance between the valve member (155) and the stop member (158, 159) through which fluid may flow towards the respective valve seat (147).

7. A flow control device (120) according to any preceding claim, wherein there are first and second stops (158, 159), the first stop (158) being proximal the first end of the valve member (155) and the second stop (159) being proximal the second end of the valve member (155).

8. A flow control device (120) according to any preceding claim, wherein at least one of the first and second valve seats (147) is defined by a valve seat member (140, 141) that is in threaded engagement with the body such that the position of the valve seat is axially adjusted by rotation of the valve seat member (140, 141) about an axis of rotation,

9. A flow control device (120) according to claim 8, wherein at least one of the first and second valve seat members (140, 141) is in the form of a flow screw having a head portion (142) that is in threaded engagement with the body (121) and a shank portion (144) that is partially hollow to define the respective valve seat (147).

10. A flow control device (120) according to claim 8 or 9, wherein there Is a radial clearance between at least a first of valve seat members (140, 141) and the body (121), the clearance defining an internal flow path that is at least partially annular.

11. A flow control device according to claim 10, wherein there is at least one aperture (148) in the first valve seat member (140, 141) for fluid to flow from the internal flow path to the first valve seat (147), and preferably a plurality of such apertures angularly spaced the first valve seat member (140, 141).

12. A flow control device (120) according to any preceding claim, wherein the valve member (155) is penetrated by at least one bypass bore (162) that is open to the first end such that in the event that the first end is sealed against the first valve seat (147) fluid can bypass the first valve seat (147) and still flow through the body (121).

13. A flow control device (120) according to any preceding claim, wherein the at least one stop (158, 159) also limits the movement of the valve seat member (140, 141) relative to the body (121).

14. A flow control device (120) according to any preceding claim, wherein the body (121) is substantially cylindrical and defines a plurality of external flow paths (135, 136, 137) on an external surface, the external flow paths being at least partially annular, and wherein the external flow paths are preferably separated by sealing members (134).

15. A flow control device (120) according to claim 14, when dependent from claim 10, or 11 wherein at least one first external flow path (135, 136, 137) is in flow communication with a first internal flow path via at least one aperture (138) in the body (121).

16. A flow control device (120) according to any preceding claim, in combination with a mounting member (27) for fixing to a piston actuator (12) and for coupling to at least one flow directional control valve (22) for controlling the supply of fluid to the actuator (12), the mounting member (27) having at least one fluid flow path for directing fluid from the at least one flow directional control valve to the actuator, the device being disposed In at least one flow path defined in the mounting member (27), wherein the mounting member (27) preferably has first and second ports (41, 42) for fluid communication with corresponding ports on the actuator (12).

## Patentansprüche

1. Durchflusskontrollvorrichtung (120), die aufweist: ein Gehäuse (122) mit einer ersten Fluidöffnung (41) und einer zweiten Fluidöffnung (42); einen ersten Ventilsitz (147) in Fluidverbindung mit der ersten Fluidöffnung (41) und einen zweiten Ventilsitz (147) in Fluidverbindung mit der zweiten Fluidöffnung (42), wobei der erste und zweite Ventilsitz (147) im Gehäuse beabstandet sind, um einen Zwischenraum dazwischen zu definieren; ein fluiddruckbetätigtes, freibewegliches Ventilelement (155) im Zwischenraum und angeordnet, um sich in einer Richtung zum ersten Ventilsitz (147) hin und weg vom zweiten Ventilsitz (147) und in der entgegengesetzten Richtung in Abhängigkeit von den vorherrschenden Fluiddrücken in der ersten und zweiten Fluidöffnung (41, 42) zu bewegen, wobei das Ventilelement (155) ein gegenüberliegendes erstes und zweites Ende (157) für ein Zusammenwirken mit dem ersten und zweiten Ventilsitz (147) aufweist; mindestens einen Anschlag (158, 159) für das Begrenzen der Bewegung des Ventilelementes (155) in Richtung des ersten oder zweiten Ventilsitzes (147), wobei mindestens einer von erstem und zweiten Ventilsitz (147) regulierbar ist, um seine Position relativ zum Ventilelement (155) zu variieren.

2. Durchflusskontrollvorrichtung nach Anspruch 1, bei der mindestens einer von erstem und zweitem Ventilsitz (147) kegelförmig ist und vorzugsweise eine im Wesentlichen kegelstumpfförmige Fläche definiert.

3. Durchflusskontrollvorrichtung nach Anspruch 2, bei der mindestens eines von erstem und zweitem Ende (157) des Ventilelementes (155) kegelförmig ist, um den kegelförmigen von erstem und zweitem Ventilsitz (147) zu komplettieren.

4. Durchflusskontrollvorrichtung nach Anspruch 2, bei der mindestens eines von erstem und zweitem Ende (157) des Ventilelementes (155) eine kegelstumpfförmige Fläche für ein Abdichten gegen die entsprechende kegelstumpfförmige Fläche auf dem ersten oder zweiten Ventilsitz (147) definiert.

5. Durchflusskontrollvorrichtung (120) nach einem der vorhergehenden Ansprüche, bei der das Ventilelement (155) einen Hauptkörper (156) zwischen dem ersten und zweiten Ende (157) aufweist, wobei der Hauptkörper (156) so ausgebildet ist, dass er an den mindestens einen Anschlag (158, 159) anstößt, wobei der Hauptkörper (156) vorzugsweise mindestens einen Vorsprung für ein Anstoßen an den mindestens einen Anschlag (158, 159) definiert.

6. Durchflusskontrollvorrichtung (120) nach Anspruch 5, bei der der mindestens eine Vorsprung so ausgebildet ist, dass, wenn er an den Anschlag (158, 159) anstößt, ein Zwischenraum zwischen dem Ventilelement (155) und dem Anschlagelement (158, 159) vorhanden ist, durch den Fluid in Richtung des jeweiligen Ventilsitzes (147) strömen kann.

7. Durchflusskontrollvorrichtung (120) nach einem der vorhergehenden Ansprüche, bei der ein erster und zweiter Anschlag (158, 159) vorhanden sind, wobei der erste Anschlag (158) proximal zum ersten Ende des Ventilelementes (155) und der zweite Anschlag (159) proximal zum zweiten Ende des Ventilelementes (155) sind.

8. Durchflusskontrollvorrichtung (120) nach einem der vorhergehenden Ansprüche, bei der mindestens einer von erstem und zweitem Ventilsitz (147) durch ein Ventilsitzelement (140, 141) definiert wird, das in Gewindeeingriff mit dem Körper ist, so dass die Position des Ventilsitzes durch eine Drehung des Ventilsitzelementes (140, 141) um eine Rotationsachse axial reguliert wird.

9. Durchflusskontrollvorrichtung (120) nach Anspruch 8, bei der mindestens eines von erstem und zweitem Ventilsitzelement (140, 141) in der Form einer Strömungsschnecke mit einem Kopfabschnitt (142), der in Gewindeeingriff mit dem Körper (121) ist, und einem Schaftabschnitt (144) vorliegt, der teilweise hohl ist, um den jeweiligen Ventilsitz (147) zu definieren.

10. Durchflusskontrollvorrichtung (120) nach Anspruch 8 oder 9, bei der ein radialer Zwischenraum zwischen mindestens einem ersten der Ventilsitzelemente (140, 141) und dem Körper (121) vorhanden ist, wobei der Zwischenraum einen inneren Strömungsweg definiert, der mindestens teilweise ringförmig ist.

11. Durchflusskontrollvorrichtung (120) nach Anspruch 10, bei der mindestens eine Öffnung (148) im ersten Ventilsitzelement (140, 141) vorhanden ist, damit das Fluid vom inneren Strömungsweg zum ersten Ventilsitz (147) strömt, und vorzugsweise eine Vielzahl von derartigen Öffnungen, die winkelig vom ersten Ventilsitzelement (140, 141) beabstandet sind.

12. Durchflusskontrollvorrichtung (120) nach einem der vorhergehenden Ansprüche, bei der das Ventilelement (155) durch mindestens eine Bypassbohrung (162) durchdrungen wird, die zum ersten Ende offen ist, so dass in dem Fall, dass das erste Ende gegen den ersten Ventilsitz (147) abgedichtet wird, das Fluid den ersten Ventilsitz (147) umgehen kann und noch durch den Körper (121) strömt.

13. Durchflusskontrollvorrichtung (120) nach einem der vorhergehenden Ansprüche, bei der der mindestens eine Anschlag (158, 159) ebenfalls die Bewegung des Ventilsitzelementes (140, 141) relativ zum Körper (121) begrenzt.

14. Durchflusskontrollvorrichtung (120) nach einem der vorhergehenden Ansprüche, bei der der Körper (121) im Wesentlichen zylindrisch ist und eine Vielzahl von äußeren Strömungswegen (135, 136, 137) auf einer äußeren Fläche definiert, wobei die äußeren Strömungswege mindestens teilweise ringförmig sind, und wobei die äußeren Strömungswege vorzugsweise durch Dichtungselemente (134) getrennt werden.

15. Durchflusskontrollvorrichtung (120) nach Anspruch 14, wenn er vom Anspruch 10 oder 11 abhängig ist, bei der mindestens ein erster äußerer Strömungsweg (135, 136, 137) in einer Strömungsverbindung mit einem ersten inneren Strömungsweg über mindestens eine Öffnung (138) im Körper (121) ist.

16. Durchflusskontrollvorrichtung (120) nach einem der vorhergehenden Ansprüche in Verbindung mit einem Montageelement (27) für das Befestigen an einem Kolbenbetätigungselement (12) und für das Verbinden mit mindestens einem Strömungsumsteuerschieber (22) für das Steuern der Zuführung von Fluid zum Betätigungselement (12), wobei das Montageelement (27) mindestens einen Fluidströmungsweg für das Lenken des Fluids von dem mindestens einen Strömungsumsteuerschieber zum Betätigungselement aufweist, wobei die Vorrichtung in mindestens einem Strömungsweg angeordnet ist, der im Montageelement (27) definiert wird, wobei das Montageelement (27) vorzugsweise eine erste und zweite Öffnung (41, 42) für eine Fluidverbindung mit den entsprechenden Öffnungen im Betätigungselement (12) aufweist.

## Revendications

1. Dispositif de régulation du débit (120), comprenant un corps (122) comportant un premier orifice de fluide (41) et un deuxième orifice de fluide (42), un premier siège de soupape (147) en communication de fluide avec le premier orifice de fluide (41), et un deuxième siège de soupape (147) en communication de fluide avec le deuxième orifice de fluide (42), les premier et deuxième sièges de soupape (147) étant espacés dans le corps pour définir un dégagement entre eux, un élément de soupape à flotteur actionné par la pression de fluide (155), agencé dans le dégagement et destiné à se déplacer dans une direction allant vers le premier siège de soupape (147) et à l'écart du deuxième siège de soupape (147), et dans la direction opposée, en fonction des pressions de fluide prédominantes au niveau des premier et deuxième orifices de fluide (41, 42), l'élément de soupape (155) comportant des première et deuxième extrémités opposées (157) en vue d'une coopération avec les premier et deuxième sièges de soupape (147), au moins un arrêt (158, 159) pour limiter le déplacement de l'élément de soupape (155) en direction du premier ou du deuxième siège de soupape (147), au moins un des premier et deuxième sièges de soupape (147) pouvant être ajusté pour changer la position par rapport à l'élément de soupape (155).

2. Dispositif de régulation du débit selon la revendication 1, dans lequel au moins un des premier et deuxième sièges de soupape (147) est conique et définit de préférence une surface sensiblement en tronc de cône.

3. Dispositif de régulation du débit selon la reveendicaiton2, dans lequel au moins une des première et deuxième extrémités (157) de l'élément de soupape (155) est conique pour compléter le siège de soupape conique de l'un des premier et deuxième sièges de soupape (147).

4. Dispositif de régulation du débit selon la revendication 2, dans lequel au moins une des première et deuxième extrémités (157) de l'élément de soupape (155) définit une surface en tronc de cône pour établir l'étanchéité par rapport à la surface en tronc de cône correspondante sur le premier ou le deuxième siège de soupape (147).

5. Dispositif de régulation du débit (120) selon l'une quelconque des revendications précédentes, dans lequel l'élément de soupape (155) comprend un corps central (156) entre les première et deuxième extrémités (157), le corps central (156) étant configuré de sorte à buter contre le au moins un arrêt (158, 159), le corps central (156) définissant de préférence au moins une saillie destinée à buter contre le au moins un arrêt (158, 159).

6. Dispositif de régulation du débit (120) selon la revendication 5, dans lequel la au moins une saillie est configurée de sorte que lors de la butée contre l'arrêt (158, 159), un dégagement est établi entre l'élément de soupape (155) et l'élément d'arrêt (158, 159) à travers lequel le fluide peut s'écouler en direction du siège de soupape respectif (147).

7. Dispositif de régulation du débit (120) selon l'une quelconque des revendications précédentes, comprenant des premier et deuxième arrêts (158, 159), le premier arrêt (158) étant proche de la première extrémité de l'élément de soupape (155) et le deuxième arrêt (159) étant proche de la deuxième extrémité de l'élément de soupape (155).

8. Dispositif de régulation du débit (120) selon l'une quelconque des revendications précédentes, dans lequel au moins un des premier et deuxième sièges de soupape (147) est défini par un élément de siège de soupape (140, 141) engagé par filetage dans le corps, de sorte que la position du siège de soupape est ajustée axialement par la rotation de l'élément de siège de soupape (140, 141) sur un axe de rotation.

9. Dispositif de régulation du débit (120) selon la revendication 8, dans lequel au moins un des premier et deuxième éléments de siège de soupape (140, 141) a la forme d'une vis d'écoulement, comportant une partie de tête (142) engagée par filetage dans le corps (121), et une partie de tige (144) partiellement creuse afin de définir le siège de soupape respectif (147).

10. Dispositif de régulation du débit (120) selon les revendications 8 ou 9, dans lequel un dégagement radial est établi entre au moins un premier des éléments de siège de soupape (140, 141) et le corps (121), le dégagement définissant une trajectoire d'écoulement interne au moins partiellement annulaire.

11. Dispositif de régulation du débit selon la revendication 10, dans lequel au moins une ouverture (148) est formée dans le premier élément de siège de soupape (140, 141) pour permettre l'écoulement du fluide de la trajectoire d'écoulement interne vers le premier siège de soupape (147), plusieurs ouvertures de ce type étant de préférence espacées angulairement par rapport au premier élément de siège de soupape (140, 141).

12. Dispositif de régulation du débit (120) selon l'une quelconque des revendications précédentes, dans lequel l'élément de soupape (155) est pénétré par au moins un alésage de dérivation (162), ouvert vers la première extrémité, de sorte que lorsque l'étanchéité de la première extrémité est établie par rapport au premier siège de soupape (147) le fluide peut contourner le premier siège de soupape (147) et peut toujours s'écouler à travers le corps (121).

13. Dispositif de régulation du débit (120) selon l'une quelconque des revendications précédentes, dans lequel le au moins un arrêt (158, 159) limite également le déplacement de l'élément de siège de soupape (140, 141) par rapport au corps (121).

14. Dispositif de régulation du débit (120) selon l'une quelconque des revendications précédentes, dans lequel le corps (121) est sensiblement cylindrique et définit plusieurs trajectoires d'écoulement externes (135, 136, 137) sur une surface externe, les trajectoires d'écoulement externes étant au moins partiellement annulaires, les trajectoires d'écoulement externes étant de préférence séparées par des éléments d'étanchéité (134).

15. Dispositif de régulation du débit (120) selon la revendication 14, dépendant des revendications 10 ou 11, dans lequel la au moins une première trajectoire d'écoulement externe (135, 136, 137) est en communication d'écoulement avec une première trajectoire d'écoulement interne par l'intermédiaire d'au moins une ouverture (138) dans le corps (121).

16. Dispositif de régulation du débit (120) selon l'une quelconque des revendications précédentes, en combinaison avec un élément de montage (27), pour assurer la fixation d'un actionneur à piston (12) et l'accouplement à au moins une soupape de commande directionnelle de l'écoulement (22), afin de contrôler l'alimentation en fluide de l'actionneur (12), l'élément de montage (27) comportant au moins une trajectoire d'écoulement de fluide pour diriger le fluide de la au moins une soupape de commande directionnelle de l'écoulement vers l'actionneur, le dispositif étant agencé dans au moins une trajectoire d'écoulement définie dans l'élément de montage (27), l'élément de montage (27) comportant de préférence des premier et deuxième orifices (41, 42) en vue d'une communication de fluide avec des orifices correspondants sur l'actionneur (12).
